# EUROPÄISCHE PATENTSCHRIFT

(11) **EP 2 590 773 B1**
(45) Veröffentlichungstag und Bekanntmachung des Hinweises auf die Patenterteilung: **22.04.2020**
(21) Anmeldenummer: 11831790.8
(22) Anmeldetag: 16.06.2011
(51) Int. Cl.: B23K 9/04, B23K 26/34, F01D 5/22

(54) **VERFAHREN UND VORRICHTUNG ZUM AUFTRAGEN VON MATERIALSCHICHTEN AUF EINEM WERKSTÜCK AUS TiAl**
PROCESS AND APPARATUS FOR BUILDING UP LAYERS OF MATERIAL ONTO A WORKPIECE MADE OF TIAL
PROCÉDÉ ET DISPOSITIF DE DÉPOT DE COUCHES DE MATÉRIAU SUR UNE PIÈCE EN TIAL

(30) Priorität: 05.07.2010 DE 102010026084
(43) Veröffentlichungstag der Anmeldung: 15.05.2013
(73) Patentinhaber: MTU Aero Engines AG, 80995 München (DE)
(72) Erfinder: RICHTER, Karl-Hermann, 85229 Markt Indersdorf (DE); HANRIEDER, Herbert, 85411 Hohenkammer (DE); DUDZIAK, Sonja, 74321 Bietigheim-Bissingen (DE); GRÜNINGER, Albert, 30627 Hannover (DE)
(86) Internationale Anmeldenummer: PCT/DE2011/001299
(87) Internationale Veröffentlichungsnummer: WO 2012/069029

(56) Entgegenhaltungen:
- EP-A1- 0 287 371
- WO-A2-01/87528
- US-A- 5 554 837
- US-A1- 2004 191 064
- US-A1- 2008 014 457

## Beschreibung

Die Erfindung betrifft Verfahren zum Auftragen von Materialschichten auf einem Werkstück aus TiAl, insbesondere zur Oberflächenveredelung, Panzerung, Reparatur oder zur Herstellung von Werkstücken aus TiAl. Die Gattung zeigt die US-A-5554837.

Werkstoffe aus Titanaluminiden (TiAl) gelten als nicht schmelzschweißgeeignet und deshalb auch nicht als auftragsschweißbar.

Aus der DE 60 2006 000 955 T2 ist ein Verfahren zur Reparatur von Turbinenschaufeln aus beispielsweise Ti17 oder RA6V durch Laser-Pulverauftragsschweißen bekannt, wobei ein Pulver artgleichen, aber nicht notwendigerweise identischen Materials mit einer Kornklassifizierung von vorzugsweise zwischen 30 und 100 µm über eine mit dem Laserstrahl konzentrische Ringdüse zugeführt wird.

Aus der DE 39 42 051 A1 ist ein Verfahren zum Herstellen von Gegenständen durch schichtenweise Aufbringung bekannt. Das Verfahren wird zum Komplettaufbau oder zur Reparatur einer Verdichterschaufel exemplifiziert. Dabei wird ein Substrat durch einen Laserstrahl unter Schutzgas aufgeschmolzen, und ein vorgewärmtes Pulver wird unter Verwendung eines inerten Trägergases der aufgeschmolzenen Stelle seitlich zugeführt und eingeschmolzen. Nach Erstarren der Schmelze wird der Vorgang wiederholt, um eine nächste Schicht aufzutragen. Die Schichtdicke beträgt beispielhaft etwa 0,38 mm; als Material für das Substrat und das Pulver wird neben anderen Superalloys auch ein Ti-6A1-4V (auch als RA6V bekannt) genannt.

Die Schwierigkeiten bei der Auftragsschweißung von Titanaluminiden bestehen jedoch weiterhin. Aufgrund der hohen Schmelztemperatur von TiAl ist die Temperaturführung schwierig, und thermische Spannungen im Bauteil sind schwer beherrschbar. Dieses Problem tritt insbesondere, aber nicht nur, bei Reparaturen und Panzerbeschichtungen zutage, bei denen nur ein lokal begrenzter Bereich eines Bauteils thermisch beeinflusst ist. Besonders schwierig ist die Auftragsschweißung in der Nähe abrupter, insbesondere spitzwinkeliger Konturübergänge wie etwa von Nuten und dergleichen. Beispiele sind Z-Nuten von Turbinenschaufeln, bei denen eine Flanke der Nut in der Nähe des Nutradius gepanzert wird, um den hohen mechanischen Belastungen widerstehen zu können. Hinweise auf die Funktion und eine beispielhafte Form einer Z-Nut an einem Spitzendeckband einer Laufschaufel einer Turbinenstufe können beispielsweise der DE 10 2008 037 521 A1 entnommen werden.

Die US 2005/0067064 A1 offenbart ein Laser-Auftragsschweißverfahren eines Stahlpulvers allein oder als Gemisch mit TiC-, TiN- oder WC-Pulver auf einem Stahlsubstrat. Es handelt sich um einen zweistufigen Prozess, bei dem zuerst das Pulvermaterial in einer Schichtdicke von 0,08" und einer Schichtbreite von 0,2" abgelegt und dann durch einen Laserstrahl eingeschmolzen wird. Ein ähnliches Verfahren zur Beschichtung eines Substrats einer Aluminiumlegierung mit einem TiC-Pulver allein oder in Mischung mit Si und/oder Cu ist in der US 4,732,778 offenbart. Ein Laserschmelzverfahren für Superlegierungen bei erhöhten Temperaturen ist aus der US 5 554 837 A bekannt.

Aufgabe der vorliegenden Erfindung ist es, ein Auftragen von Materialschichten auf einem Grundwerkstoff aus oder mit einem Titanaluminid, insbesondere zur Oberflächenveredelung, Panzerung, Maßkorrektur, Reparatur oder zum Aufbau eines Werkstücks aus oder mit einem Titanaluminid, zu verbessern.

Diese Aufgabe wird durch ein Verfahren zum Auftragen von Materialschichten auf einem Grundwerkstoff aus TiAl mit den Merkmalen des Anspruchs 1 gelöst.

Die vorliegende Erkenntnis beruht auf der Überlegung, dass eine lokal begrenzte und vorbestimmte Vorwärmung des Bauteils die zum Auftragsschweißen erforderliche zusätzliche Energie begrenzen und den wärmebeeinflussten Bereich des Bauteils verkleinern kann, dass eine kontrollierte Temperaturführung auch nach dem Schweißvorgang die Bauteilbeanspruchung herabsetzen kann und dass eine induktive Erwärmung die genannten Bedingungen gut erfüllen kann.

Erfindungsgemäß weist ein Verfahren zum Auftragen von einer oder mehreren Materialschichten auf einem Werkstück aus einem ein Titanaluminid enthaltenden oder daraus bestehenden Werkstoff die Schritte auf:
- gegebenenfalls Vorbereiten des Werkstücks;
- Erwärmen des Werkstücks in einem lokal begrenzten Bereich mittels Induktion auf eine vorgegebene Vorwärmtemperatur; und
- Auftragen eines, vorzugsweise pulverförmigen, Zusatzstoffs auf der erwärmten Oberfläche des Werkstücks mittels Auftragsschweißens, insbesondere Laser-, Plasma-, Mikro-Plasma-, WIG- oder Mikro-WIG-Auftragsschweißens, wobei der Zusatzstoff ein Titanaluminid aufweist.

Im Zusammenhang mit der Erfindung wird als ein Titanaluminid beispielsweise, aber nicht ausschließlich, TNB, TNM, □₂-Ti₃Al oder □-TiAl oder eine Mischung von diesen und/oder mit anderen intermetallischen Phasen von Titan und Aluminium verstanden. Es können auch mehrphasige Legierungen von Titan und Aluminium davon umfasst sein. Für Werkstoffe, die aus einem Titanaluminid "bestehen", ist es im Sinne der Erfindung unschädlich, wenn sie Verunreinigungen enthalten. Nach der Erfindung kann der Werkstoff ein Titanaluminid enthalten; damit sind einphasige oder mehrphasige Legierungen, insbesondere Superlegierungen, mit einem Titanaluminid oder mit Titanaluminiden zu verstehen. In einem Zusatzstoff, der ein Titanaluminid "aufweist", kann im Sinne der Erfindung das Titanaluminid als einziger Bestandteil enthalten sein. Im Verlauf der Beschreibung werden alle Titanaluminide im vorstehend beschriebenen Sinn unter die Kurzbezeichnung "TiAl" gefasst.

Unter einem Vorbereiten kann sowohl das bloße Aufspannen des Werkstücks verstanden werden. Der Schritt des Vorbereitens kann auch ein Reinigen einer zum Auftragen bestimmten Oberfläche, ein Freischneiden einer Schadstelle oder dergleichen und/oder andere vorbereitende Schritte umfassen.

Die Erfinder haben festgestellt, dass es ausreicht, wenn die Vorwärmtemperatur über einer kritischen Temperatur eines Spröd-/Duktil-Phasenübergangs des Werkstoffs liegt. Diese kritische Temperatur kann bei TiAl insbesondere zwischen 700 °C und 800 °C gefunden werden. In diesem Fall kann die insgesamt eingetragene Wärme so kontrolliert werden, dass nur ein lokal begrenzter Bereich thermisch beeinflusst ist, und Temperaturspannungen können gut kontrolliert werden.

Wenn durch die Beschichtung eine Panzerung des Werkstücks gewünscht wird, ist es vorteilhaft, wenn der Zusatzstoff einen Hartstoff, insbesondere Titancarbid, Titanborid, Bornitrid oder dergleichen oder eine Mischung von diesen aufweist. Dabei kann der Anteil des Hartstoffs, insbesondere Titancarbid, in dem Zusatzstoff vorzugsweise zwischen 15% und 90% liegen.

Die Erfinder haben ferner festgestellt, dass eine geeignete mittlere Korngröße des Titanaluminids in dem Zusatzstoff in einem Bereich von 25 bis 75 µm liegt und ferner eine geeignete mittlere Korngröße des Titancarbids in einem Bereich von 3 bis 45 µm liegt.

In dem Verfahren kann der Schritt des Auftragens selbst zweistufig sein, wobei zunächst der pulverförmige Zusatzstoff vor, während oder nach dem Erwärmen des Werkstückes auf der Oberfläche des Werkstücks abgelegt wird und dann der abgelegte Zusatzstoff durch Laser- oder Plasmastrahl aufgeschmolzen wird. Alternativ kann der pulverförmige Zusatzstoff einstufig über eine mit einem Laser- oder Plasmastrahl koaxiale Düse oder seitlich zu einem Laser- oder Plasmastrahl zugeführt werden.

Eine besondere Flexibilität hinsichtlich der Festigkeits- und Oberflächeneigenschaften kann erreicht werden, wenn die Zugabe und Zusammensetzung des Zusatzstoffes abschnittweise veränderlich gesteuert wird.

Es hat sich ferner als praktikabel herausgestellt, wenn der Zusatzstoff in mehreren nebeneinander liegenden Spuren von vorzugsweise 0,2 bis 5 mm Breite und vorzugsweise 0,1 bis 3 mm Höhe aufgetragen wird, wobei sich die Spuren vorzugsweise überlappen, wobei ein Überlappungsgrad nebeneinander liegender Spuren besonders bevorzugt 50 bis 90% beträgt.

Als besonders vorteilhaft hat es sich ferner herausgestellt, wenn nach dem Auftragen eine Abkühlung des Werkstücks mit einer definierten Abkühlrate auf eine Abkühltemperatur von erfindungsgemäß zwischen 500 °C und 650 °C durchgeführt wird, wobei die Abkühlrate erfindungsgemäß zwischen 5 K/min und 50 K/min liegt. Danach kann ein ungeregeltes Abkühlens bis auf Raumtemperatur erfolgen.

Das Verfahren kann beispielsweise zur Oberflächenveredelung, Panzerung, Maßkorrektur oder Reparatur eines aus einem ein Titanaluminid enthaltenden oder daraus bestehenden Werkstoff hergestellten Werkstücks angewendet werden. Es kann insbesondere zur Panzerung, Maßkorrektur oder Reparatur einer Oberfläche eines Schenkels einer vorzugsweise spitzwinkligen Nut eines aus einem ein Titanaluminid enthaltenden oder daraus bestehenden Werkstoff hergestellten Bauteils angewendet werden, wobei eine im Zuge des Verfahrens über eine vorbestimmte kritische Temperatur erwärmte Zone des Werkstücks den Bereich eines Nutradius nicht erreicht, und/oder wobei eine zum induktiven Erwärmen des Werkstücks verwendete Spule an die Form der Nut angepasst ist.

Das Verfahren kann zur Panzerung, Maßkorrektur oder Reparatur einer Funktionsfläche einer Z-Nut eines Spitzendeckbandes einer Turbinenschaufel oder einer Dichtfinne an einem Turbinen-BLISK oder einer Schaufelspitze einer Verdichterlaufschaufel oder eines Teils eines Gehäuses einer Strömungsmaschine, wobei die genannten Gegenstände aus einem ein Titanaluminid enthaltenden oder daraus bestehenden Werkstoff hergestellt sind, angewendet werden.

Das Verfahren kann auch zur Herstellung eines Werkstücks, insbesondere einer Turbinen- oder Verdichterschaufel oder eines Turbinen- oder Verdichtergehäuses oder eines Teils davon, angewendet werden, wobei zunächst ein Substrat aus einem ein Titanaluminid enthaltenden oder daraus bestehenden Werkstoff vorbereitet wird und dann Schichten eines Zusatzstoffs unter Verwendung des vorstehend beschriebenen Verfahrens aufgetragen werden, bis eine vorgegebene Kontur des Werkstücks ausgebildet ist.

Eine Vorrichtung zum Auftragen von Materialschichten auf einem aus einem ein Titanaluminid enthaltenden oder daraus bestehenden Werkstoff hergestellten Werkstück mittels Auftragsschweißens, insbesondere Laser-, Plasma-, Mikro-Plasma-, WIG- oder Mikro-WIG-Auftragsschweißens, weist eine Halteeinrichtung zum Halten eines Werkstücks, eine Zuführungseinrichtung zum Zuführen eines pulverförmigen, ein Titanaluminid aufweisenden Zusatzstoffs, eine Schmelzeinrichtung zum Schmelzen des Zusatzstoffs, wobei die Schmelzeinrichtung zur Erzeugung eines Laser- oder Plasmastrahls und zum Richten des Laser- oder Plasmastrahls auf das Werkstück eingerichtet sein kann, und eine Vorwärmeinrichtung zum Vorwärmen des Werkstücks auf und ist zur Durchführung des vorstehend beschriebenen Verfahrens ausgelegt und eingerichtet ist, wobei insbesondere die Vorwärmeinrichtung zum induktiven, lokal begrenzten Erwärmen einer Oberfläche des Werkstücks ausgelegt und eingerichtet ist.

Durch die erfindungsgemäße induktive lokale Vorwärmung kann insbesondere sichergestellt werden, dass, beispielsweise in der Umgebung eines Radius einer Nut, eine vorgegebene weitere kritische Temperatur nicht überschritten wird. Diese als Obergrenze einzuhaltende weitere kritische Temperatur kann neben dem Werkstoff insbesondere von der Form bzw. Geometrie der Nut abhängen.

Sowohl zur Einhaltung dieser Obergrenze als auch zur Erreichung einer durch die Vorwärmtemperatur gegebenen Untergrenze kann vorzugsweise eine Induktionsspule, insbesondere ihr Material, ihre Geometrie und/oder ihre Leistung, und/oder deren Position entsprechend vorgegeben werden. Insbesondere kann eine Erwärmung nicht über die vorgegebene weitere kritische Temperatur in einer Zone des Werkstücks, etwa der oben genannten Nut, dadurch sichergestellt werden, dass die lokale Erwärmung durch Induktion eine vorgegebene zweite kritische Temperatur nicht übersteigt. Dabei können die zweite und die weitere kritische Temperatur identisch sein, die zweite Temperatur kann unter Berücksichtigung von Wärmeleitung sowie Wärmeabgabe zwischen der Zone, für den die weitere kritische Temperatur vorgegeben ist, und dem lokal erwärmten Bereich beispielsweise auch höher sein.

In einer bevorzugten Ausführung werden Materialschichten aufgetragen, bis eine gewünschte Form des Werkstücks erreicht oder überfüllt, d.h. überschritten ist. In letzterem Fall können, beispielsweise spanend, aufgetragene Materialschichten endbearbeitet werden, bis die gewünschte Werkstückform erreicht ist.

Weitere Merkmale und Vorteile ergeben sich aus weiteren Unteransprüchen und den Ausführungsbeispielen und Abwandlungen.

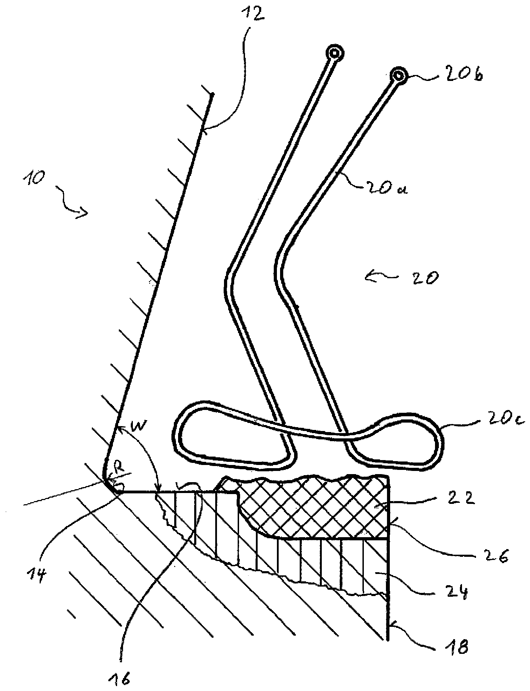

Hierzu zeigt die einzige Figur schematisch eine Anwendung des Auftragsschweißens mit induktiver Vorwärmung der Z-Nut einer aus einem Titanaluminid (TiAl) hergestellten Laufschaufel 10 einer Niederdruckturbine (NDT) mit Titancarbid (TiC) als ein bevorzugtes Ausführungsbeispiel der vorliegenden Erfindung.

Die Laufschaufel 10 weist im dargestellten Bereich der Z-Nut eine Flanke 12 auf, die über einen Übergangsbereich 14 in eine Schulter 16 übergeht. Der Übergangsbereich 14 kann auch als Nut 14 im engeren Sinn bezeichnet werden. Dabei ist ein Nutradius R der Nut 14 im Vergleich mit den Bauteilabmessungen vergleichsweise klein; ein Nutwinkel W der Nut 14 ist kleiner als 90°. Die Schulter 16 fällt schließlich im rechten Winkel zu einer Seite 18 ab, wobei natürlich auch andere Schulterwinkel denkbar sind.

Der zu panzernde Bereich der Z-Nut liegt auf der Fläche der Schulter 16. Beim Auftragsschweißen an dieser Stelle ist es wichtig, dass in der Umgebung der Nut 14 die Temperatur einen weiteren kritischen Wert nicht übersteigt. Es wird eine Spule 20 mit einer besonders angepassten Form und Positionierung eingesetzt. Die Spule 20 weist zwei Zuleitungen 20a mit Anschlussösen 20b auf. Die Zuleitungen 20a verlaufen im Wesentlichen parallel und in ihrer Hauptausrichtung der Kontur der Flanke 12 folgend. Die Zuleitungen 20a enden über einem äußeren Bereich der Schulter 16 und weiten sich zu einer Schleife auf, die einen Fuß 20c bildet. Der Fuß 20c verläuft in gleichmäßigem Abstand über der Schulter 16.

Mit der Hilfe der Spule 20 wird die Oberfläche der Schulter 16 lokal gezielt auf eine Vorwärmtemperatur erwärmt, die oberhalb einer kritischen Temperatur des Spröd-/Duktil-Phasenübergangs des TiAl-Werkstoffs liegt, also typischerweise zwischen 700°C und 800°C. Auf die vorerwärmte Oberfläche der Schulter 16 wird dann mittels einer nicht näher dargestellten Auftragsvorrichtung ein Zusatzstoff aufgetragen. Der Auftrag erfolgt durch ein an sich bekanntes Laser-Pulver-Auftragsschweißverfahren. Nach dem Laserstrahlauftragsschweißprozess wird mit einer definierten Abkühlrate zwischen 5 K/min und 50 K/min auf eine Temperatur von typischerweise 500°C bis 650°C abgekühlt. Anschließend erfolgt eine Selbstabkühlung bis zu Raumtemperatur.

Als Zusatzstoff wird ein Gemisch aus TiAl-Pulver mit TiC-Partikeln verwendet. Dabei weist das TiAl-Pulver eine mittlere Korngröße von 25 µm bis 75 µm auf und weisen die TiC-Partikel eine Abmessung von 3 µm bis 45 µm auf. Der Anteil der TiC-Partikel im TiAl/TiC-Gemisch beträgt zwischen 15% und 90%.

Das Pulvergemisch wird mit einem Inertstoff, vorzugsweise einem Edelgas wie etwa Argon, gefördert und über eine Düse koaxial oder lateral zu einem Laserstrahl auf den vorerwärmten Bereich der Schulter 16 aufgebracht und durch den Laserstrahl aufgeschmolzen und aufgeschweißt. Die Laserleistung beträgt typischerweise 80 W bis 4000 W. Es werden bevorzugt mit einer mittleren Vorschubgeschwindigkeit von 100 mm/min bis 1500 mm/min mehrere Spuren überlappend nebeneinander und in mehreren Lagen aufgeschweißt. Die Spurbreite beträgt typischerweise 0,2 mm bis 5 mm, die Spurhöhe beträgt typischerweise 0,1 mm bis 3 mm, und der Überlappungsgrad beträgt typischwerweise 50% bis 90%.

Es bildet sich eine aufgeschweißte Schicht 22, die mit dem Grundwerkstoff der Schaufel 10 integral verbunden ist. Durch die besondere Art der Vorerwärmung kann ein gesamter Wärmeeintrag durch die Vorerwärmung und den Laserstrahl auf eine wärmebeeinflusste Zone 24 beschränkt werden, die den Übergangsbereich (Nutradius) 14 nicht umfasst.

Nach dem Aufschweißen wird die aufgeschweißte Schicht 22 endbearbeitet, um eine glatte und maßhaltige Oberfläche zu schaffen. In der Figur ist die aufgeschweißte Schicht 22 im Bereich der Seite 18 bereits mit einer endbearbeiteten Seite 26 dargestellt.

Das erfindungsgemäße Verfahren ermöglicht eine vorteilhafte Temperaturführung. Insbesondere kann durch die lokale Vorwärmung erreicht werden, dass die wärmebeeinflusste Zone 24 den kritischen Übergangsbereich 14 nicht erreicht und der Übergangsbereich 14 daher von thermisch induzierten Veränderungen und Temperaturspannungen weitgehend frei bzw. seine Temperatur unter einer weiteren kritischen Temperatur bleibt. Als Wärmebeeinflussung wird dabei eine technisch relevante Erwärmung über eine bekannte kritische Temperaturgrenze im vorgenannten Sinne verstanden; es versteht sich, dass eine geringfügige, aber im vorgenannten Sinn unschädliche Erwärmung des Übergangsbereichs 14 oft unvermeidlich ist, aber in Kauf genommen werden kann und insbesondere vom erfindungsgemäßen Verfahren mit umfasst wird. Eine induktive Vorwärmung hat auch den Vorteil, dass eine geregelte und definierte Abkühlrate einfach umgesetzt werden kann. Durch eine kontrollierte Abkühlung können auch thermische Spannungen reduziert werden.

Das vorstehend beschriebene Verfahren ist nicht auf Z-Nuten ("Z-Notches") von Turbinenschaufeln beschränkt. Es kann ganz allgemein zur Oberflächenveredelung, Panzerung, Maßkorrektur oder Reparatur eines aus einem ein Titanaluminid hergestellten Werkstücks, ja sogar zum Herstellen durch schichtweisen Aufbau eines solchen Werkstücks angewendet werden. Die Verwendung von Hartstoffen wie etwa TiC kann auf besonders beanspruchte Bereich beschränkt werden oder ganz entfallen. So ist das vorstehend beschriebene Verfahren verallgemeinerbar auf ein Verfahren zum Auftragen von Materialschichten auf einem Grundwerkstoff, wobei der Grundwerkstoff und der für die Auftragsschichten verwendete Zusatzstoff jeweils ein Titanaluminid aufweisen.

Das Verfahren kann insbesondere auch zur Reparatur von Turbinenschaufeln z.B. einer Niederdruckturbine aus TiAl eingesetzt werden. Ferner können Maßkorrekturen an Dichtfins durch Auftragsschweißung mit TiAl-Pulver oder, im Falle einer Panzerung, mit einem TiAl/TiC-Pulvergemisch durchgeführt werden. Auch können verschlissene Z-Nuten gegebenenfalls zur Maßkorrektur mit TiAl-Pulver auftragsgeschweißt werden und in dem ursprünglich gepanzerten Bereich mit einem TiAl/TiC-Pulvergemisch wieder gepanzert werden.

Eine weitere Anwendung des beschriebenen Verfahrens ist die Reparatur von Verdichterlaufschaufeln an der Schaufelspitze. Hierbei wird bevorzugt artgleicher TiAl-Werkstoff durch Laser-Pulver-Auftragsschweißen aufgebracht. Weiterhin können mit dem beschriebenen Verfahren verschlissene Bereiche von Gehäusen aus TiAl-Legierungen mit artgleichem TiAl-Werkstoff repariert werden.

Das erfindungsgemäße Verfahren wurde vorstehend im Zusammenhang mit einem einstufigen Laser-Pulver-Auftragsschweißverfahren. In einer Abwandlung kann das Pulvergemisch auch in einem ersten Schritt auf der vorerwärmten Oberfläche abgelegt und in einem zweiten Schritt durch einen Laserstrahl aufgeschweißt werden.

In weiteren Abwandlungen kann anstelle des Laser-Pulver-Auftragsschweißverfahrens auch ein (Mikro-)Plasma- oder (Mikro-)WIG-Auftragsschweißverfahren verwendet werden. Auch dabei wird eine Temperatursteuerung derart durchgeführt, dass das Bauteil über die kritische Temperatur des Spröd-/Duktil-Phasenübergangs vorerwärmt wird und nach dem Auftragsschweißprozess mit einer hinreichend langsamen Abkühlrate abgekühlt wird, und dass die insgesamt wärmebeeinflusste Zone auf einen vorgegebenen Bereich begrenzt ist.

Anstelle von TiC können zur Panzerung auch beispielsweise Titanborid, Bornitrid oder andere Hartstoffe im Gemisch mit einem TiAl-Pulver aufgebracht werden.

Die vorliegende Erfindung wurde vorstehend anhand eines Ausführungsbeispiels und einiger Abwandlung im Detail erläutert. Es versteht sich, dass dem Fachmann vielfältige Abwandlungen ersichtlich sein werden, die dennoch vom Umfang der Erfindung, wie sie in den beigefügten Patentansprüchen niedergelegt ist, erfasst sind.

## Patentansprüche

1. Verfahren zum Auftragen von wenigstens einer Materialschicht (22) auf einem Werkstück (10) aus einem ein Titanaluminid enthaltenden, insbesondere daraus bestehenden, Werkstoff, wobei das Verfahren die Schritte aufweist:
- Erwärmen des Werkstücks in einem lokal begrenzten Bereich (16) mittels Induktion auf eine vorgegebene Vorwärmtemperatur;
- Auftragen eines, vorzugsweise pulverförmigen, Zusatzstoffs auf der erwärmten Oberfläche des Werkstücks mittels Auftragsschweißens, insbesondere Laser-, Laser-Pulver-, Plasma-, Mikro-Plasma-, WIG- oder Mikro-WIG-Auftragsschweißens, wobei der Zusatzstoff ein Titanaluminid aufweist; und
- Abkühlen des Werkstücks mit einer definierten Abkühlrate auf eine Abkühltemperatur zwischen 500°C und 650°C,
**dadurch gekennzeichnet, dass** die Abkühlrate zwischen 5K/min und 50K/min liegt.

2. Verfahren nach Anspruch 1, **dadurch gekennzeichnet, dass** die Vorwärmtemperatur bei oder über einer kritischen Temperatur eines Spröd-/Duktil-Phasenübergangs des Werkstoffs, insbesondere zwischen 700 °C und 800 °C liegt.

3. Verfahren nach einem der vorstehenden Ansprüche, **dadurch gekennzeichnet, dass** der Zusatzstoff einen Hartstoff, insbesondere Titancarbid, Titanborid, Bornitrid oder dergleichen oder eine Mischung von diesen aufweist, wobei der Anteil des Hartstoffs, insbesondere des Titancarbids, in dem Zusatzstoff vorzugsweise zwischen 15% und 90% liegt.

4. Verfahren nach einem der vorstehenden Ansprüche, **dadurch gekennzeichnet, dass** der Zusatzstoff ein Titanaluminid mit einer mittleren Korngröße von 25 bis 75 µm und vorzugsweise Titancarbid mit einer mittleren Korngröße von 3 bis 45 µm aufweist.

5. Verfahren nach einem der vorstehenden Ansprüche, **dadurch gekennzeichnet, dass** der Schritt des Auftragens die Schritte aufweist:
- Ablegen des pulverförmige Zusatzstoffs auf der Oberfläche des Werkstücks; und
- Aufschmelzen des abgelegten Zusatzstoffs durch Laser- oder Plasmastrahl.

6. Verfahren nach einem der Ansprüche 1 bis 4, **dadurch gekennzeichnet, dass** in dem Schritt des Auftragens der pulverförmige Zusatzstoff über eine mit einem Laser- oder Plasmastrahl koaxiale Düse oder seitlich zu einem Laser- oder Plasmastrahl zugeführt wird.

7. Verfahren nach einem der vorstehenden Ansprüche, **dadurch gekennzeichnet, dass** die Zugabe und Zusammensetzung des Zusatzstoffes abschnittweise veränderlich gesteuert wird.

8. Verfahren nach einem der vorstehenden Ansprüche, **dadurch gekennzeichnet, dass** eine Leistung eines bei dem Verfahren eingesetzten Lasers 80 bis 4000 W beträgt, wobei vorzugsweise eine Vorschubgeschwindigkeit zwischen 100 und 1500 mm/min liegt.

9. Verfahren nach einem der vorstehenden Ansprüche, **dadurch gekennzeichnet, dass** der Zusatzstoff in mehreren nebeneinander liegenden Spuren, die vorzugsweise eine Breite von 0,2 bis 5 mm und/oder eine Höhe von 0,1 bis 3 mm aufweisen, aufgetragen wird, wobei sich die Spuren vorzugsweise überlappen, wobei ein Überlappungsgrad nebeneinander liegender Spuren besonders bevorzugt 50 bis 90% beträgt.

10. Verfahren zur Oberflächenveredelung, Panzerung, Maßkorrektur oder Reparatur eines Werkstücks (10), wobei das Verfahren die Schritte aufweist:
- Vorbereiten des Werkstücks; und
- Auftragen von wenigstens einer Schicht (22) eines Zusatzstoffs unter Verwendung eines Verfahrens nach einem der vorstehenden Ansprüche.

11. Verfahren zur Panzerung, Maßkorrektur oder Reparatur einer Oberfläche eines Schenkels einer, vorzugsweise spitzwinkligen, Nut eines aus einem ein Titanaluminid enthaltenden, insbesondere daraus bestehenden, Werkstoff hergestellten Bauteils unter Verwendung eines Verfahrens nach Anspruch 10, wobei eine Zone des Werkstücks in einem Bereich eines Nutradius nicht über eine vorgegebene weitere kritische Temperatur des Werkstoffs erwärmt wird, die vorzugsweise von der Form der Nut abhängt, wobei eine zum induktiven Erwärmen des Werkstücks verwendete Spule und/oder deren Position relativ zur Nut an die Nut, insbesondere deren Form, angepasst ist.

12. Verfahren zur Panzerung, Maßkorrektur oder Reparatur einer Funktionsfläche einer Z-Nut eines Spitzendeckbandes einer Turbinenschaufel (10) oder einer Dichtfinne an einem Turbinen-BLISK oder einer Schaufelspitze einer Verdichterlaufschaufel oder eines Teils eines Gehäuses einer Strömungsmaschine, unter Verwendung eines Verfahrens nach Anspruch 10.

13. Verfahren zur Herstellung eines Werkstücks (10), insbesondere einer Turbinen- oder Verdichterschaufel oder eines Turbinen- oder Verdichtergehäuses oder eines Teils davon, wobei das Verfahren die Schritte aufweist:
- Vorbereiten eines Substrats aus einem ein Titanaluminid enthaltenden, insbesondere daraus bestehenden Werkstoff; und
- Auftragen von wenigstens einer Schicht eines Zusatzstoffs unter Verwendung eines Verfahrens nach einem der Ansprüche 1 bis 9, bis eine vorgegebene Kontur des Werkstücks ausgebildet oder überfüllt ist.

## Claims

1. Method for applying at least one material layer (22) to a workpiece (10) made of a material containing a titanium aluminide, in particular consisting thereof, the method comprising the steps of:
- heating the workpiece in a locally delimited area (16) by means of induction to a predetermined preheating temperature;
- applying a preferably powdery additive to the heated surface of the workpiece by means of deposition welding, in particular laser, laser powder, plasma, micro-plasma, TIG or micro-TIG deposition welding, the additive comprising a titanium aluminide; and
- cooling the workpiece at a defined cooling rate to a cooling temperature between 500°C and 650°C,
**characterized in that**
the cooling rate is between 5 K/min and 50 K/min.

2. Method according to claim 1, **characterized in that** the preheating temperature is at or above a critical temperature of a brittle/ductile phase transition of the material, in particular between 700°C and 800°C.

3. Method according to either of the preceding claims, **characterized in that** the additive comprises a hard material, in particular titanium carbide, titanium boride, bomitride or the like, or a mixture thereof, the proportion of hard material, in particular titanium carbide, in the additive preferably being between 15% and 90%.

4. Method according to any of the preceding claims, **characterized in that** the additive comprises a titanium aluminide having an average grain size of from 25 to 75 µm and preferably titanium carbide having an average grain size of from 3 to 45 µm.

5. Method according to any of the preceding claims, **characterized in that** the application step comprises the steps of:
- depositing the powdery additive on the surface of the workpiece; and
- melting the deposited additive using a laser or plasma beam.

6. Method according to any of claims 1 to 4, **characterized in that**, in the application step, the powdery additive is supplied by means of a coaxial nozzle having a laser or plasma beam or laterally to a laser or plasma beam.

7. Method according to any of the preceding claims, **characterized in that** the addition and composition of the additive is variably controlled in portions.

8. Method according to any of the preceding claims, **characterized in that** a power of a laser used in the method is 80 to 4000 W, a feed rate preferably being between 100 and 1500 mm/min.

9. Method according to any of the preceding claims, **characterized in that** the additive is applied in a plurality of adjacent tracks which preferably have a width of from 0.2 to 5 mm and/or a height of from 0.1 to 3 mm, the tracks preferably overlapping, a degree of overlap of adjacent tracks being particularly preferably 50 to 90%.

10. Method for the surface finishing, armoring, dimensional correction or repair of a workpiece (10), wherein the method comprises the steps of:
- preparing the workpiece; and
- applying at least one layer (22) of an additive using a method according to any of the preceding claims.

11. Method for the armoring, dimensional correction or repair of a surface of a leg of a preferably acute-angled slot of a component produced from a material containing a titanium aluminide, in particular consisting thereof, using a method according to claim 10, wherein a zone of the workpiece in a region of a slot radius is not heated above a predetermined further critical temperature of the material, which zone preferably depends on the shape of the slot, wherein a coil used for inductive heating of the workpiece and/or the position thereof relative to the slot is adapted to the slot, in particular the shape thereof.

12. Method for the armoring, dimensional correction or repair of a functional surface of a Z slot of a tip shroud of a turbine blade (10) or a sealing fin on a turbine blisk or a blade tip of a compressor rotor blade or part of a housing of a turbomachine, using a method according to claim 10.

13. Method for producing a workpiece (10), in particular a turbine or compressor blade or a turbine or compressor housing or a part thereof, wherein the method comprises the steps of:
- preparing a substrate made of a material containing a titanium aluminide, in particular consisting thereof; and
- applying at least one layer of an additive using a method according to any of claims 1 to 9 until a predetermined contour of the workpiece is formed or overfilled.

## Revendications

1. Procédé d'application d'au moins une couche de matériau (22) sur une pièce (10) constituée d'un matériau contenant un aluminide de titane, notamment composé de celui-ci, le procédé comprenant les étapes consistant à :
- chauffer la pièce dans une région (16) localement délimitée par induction à une température de préchauffage prédéfinie ;
- appliquer un additif, de préférence pulvérulent, sur la surface chauffée de la pièce par rechargement par soudage, notamment par rechargement par soudage laser, laser-pulvérulent, plasma, micro-plasma, TIG ou micro-TIG, dans lequel l'additif comprend un aluminide de titane ; et
- refroidir la pièce à une vitesse définie jusqu'à une température de refroidissement comprise entre 500 et 650 °C,
**caractérisé en ce que**
la vitesse de refroidissement est comprise entre 5 K/min et 50 K/min.

2. Procédé selon la revendication 1, **caractérisé en ce que** la température de préchauffage est supérieure ou égale à une température critique d'une transition de phase fragile/ductile du matériau, notamment entre 700 °C et 800 °C.

3. Procédé selon l'une des revendications précédentes, **caractérisé en ce que** l'additif comprend un matériau dur, notamment du carbure de titane, du borure de titane, du nitrure de bore ou un matériau semblable ou un mélange de ceux-ci, dans lequel la proportion du matériau dur, notamment du carbure de titane, dans l'additif, est de préférence entre 15 % et 90 %.

4. Procédé selon l'une des revendications précédentes, **caractérisé en ce que** l'additif comprend un aluminide de titane présentant une granulométrie moyenne de 25 à 75 µm et de préférence du carbure de titane présentant une granulométrie moyenne de 3 à 45 µm.

5. Procédé selon l'une des revendications précédentes, **caractérisé en ce que** l'étape d'application comprend les étapes consistant à :
- déposer de l'additif pulvérulent sur la surface de la pièce ; et
- fusionner l'additif déposé par faisceau laser ou plasma.

6. Procédé selon l'une des revendications 1 à 4, **caractérisé en ce que**, à l'étape d'application, l'additif pulvérulent est fourni par une buse coaxiale à un faisceau laser ou plasma ou latéralement à un faisceau laser ou plasma.

7. Procédé selon l'une des revendications précédentes, **caractérisé en ce que** l'addition et la composition de l'additif sont commandées de manière variable par sections.

8. Procédé selon l'une des revendications précédentes, **caractérisé en ce que** la puissance d'un laser utilisé dans le procédé est de 80 à 4 000 W, dans lequel, de préférence, une vitesse d'avance est comprise entre 100 et 1 500 mm/min.

9. Procédé selon l'une des revendications précédentes, **caractérisé en ce que** l'additif est appliqué en plusieurs pistes adjacentes, ayant de préférence une largeur de 0,2 à 5 mm et/ou une hauteur de 0,1 à 3 mm, dans lequel les pistes se chevauchent de préférence, dans lequel un degré de chevauchement des pistes adjacentes est de manière particulièrement préférée de 50 à 90 %.

10. Procédé de finition de surface, de blindage, de correction dimensionnelle ou de réparation d'une pièce (10), le procédé comprenant les étapes consistant à :
- préparer la pièce ; et
- appliquer au moins une couche (22) d'un additif à l'aide d'un procédé selon l'une des revendications précédentes.

11. Procédé de blindage, de correction dimensionnelle ou de réparation d'une surface d'une branche d'une rainure, de préférence à angle aigu, d'un composant en un matériau contenant un aluminide de titane, notamment composé de celui-ci, à l'aide d'un procédé selon la revendication 10, dans lequel une zone de la pièce dans une région d'un rayon de rainure n'est pas chauffée au-dessus d'une autre température critique prédéfinie du matériau, laquelle autre température critique dépend de préférence de la forme de la rainure, dans lequel une bobine utilisée pour le chauffage inductif de la pièce et/ou sa position par rapport à la rainure est adaptée à la rainure, notamment à sa forme.

12. Procédé de blindage, de correction dimensionnelle ou de réparation d'une surface fonctionnelle d'une rainure en Z d'une virole d'extrémité d'une aube de turbine (10) ou d'une ailette d'étanchéité sur un BLISK de turbine ou une extrémité d'aube d'une aube de compresseur ou d'une partie d'un carter de turbomachine, à l'aide d'un procédé selon la revendication 10.

13. Procédé de fabrication d'une pièce (10), notamment d'une aube de turbine ou de compresseur ou d'un carter de turbine ou de compresseur ou d'une partie de ceux-ci, le procédé comprenant les étapes consistant à :
- préparer un substrat en un matériau contenant un aluminide de titane, notamment composé de celui-ci ; et
- appliquer au moins une couche d'un additif à l'aide d'un procédé selon l'une des revendications 1 à 9 jusqu'à ce qu'un contour prédéfini de la pièce soit réalisé ou débordé.
